# EUROPEAN PATENT APPLICATION

(11) **EP 1 286 362 A1**
(43) Date of publication of application: **26.02.2003**
(21) Application number: 01000401.8
(22) Date of filing: 23.08.2001
(51) Int. Cl.: G21K 4/00, C09K 11/85

(54) **Moistureproof phosphor screens for use in radiation detectors**

(71) Applicant: AGFA-GEVAERT, 2640 Mortsel (BE)
(72) Inventor: Leblans, Paul, c/o AGFA-GEVAERT, 2640 Mortsel (BE)

(57) **Abstract**

A method has been provided of preparing a supported or self-supporting phosphor screen or panel suitable for use in radiation dectors, said detectors comprising one or more phosphor layer by the step of overcoating said screen with a moistureproof protective layer, provided thereupon by chemical vapour deposition. More preferably said radiation detector is a phosphor screen, i.a. an intensifying screen or a storage phosphor screen or panel, wherein, in a further preferred embodiment, said phosphor screen is a needle storage phosphor screen, and wherein said moistureproof protective layer is a "parylene" layer.

## Description

### FIELD OF THE INVENTION

The present invention relates to the manufacturing of phosphor screens or panels suitable for use in radiation detectors, wherein said manufacturing has a low manufacturing cost, and provides an excellent protection against moisture, both at the top side and at the edges of the said phosphor screen or panel in said radiation detector.

### BACKGROUND OF THE INVENTION

It is well-known that quite a lot of phosphors used in intensifying - or storage phosphor plates have a fair to high sensitivity for moisture, i.e. they are hygroscopic to some extent and tend to absorb water. Absorption of even small amounts of water rapidly reduces the efficiency of the phosphors to vanishingly small values.

Most of those plates or panels coated with phosphors containing halide suffer from this draw-back. Hygroscopic phosphors used in intensifying screens are e.g. BaFCl:Eu, BaFBr:Eu and GdOBr:Tm. Examples of hygroscopic X-ray storage phosphor that can be used in computer radiography systems are: BaFBr:Eu, BaFI:Eu, (Ba,Sr)F(Br,I):Eu, RbBr:Tl, CsBr:Eu, CsCl:Eu and RbBr:Eu. In order to make these hygroscopic phosphors suitable for use it is necessary to protect the phosphor particles from moisture.

One way to protect the individual phosphor particles is by coating with a substance such as e.g. SiO₂ or TiO₂ which prevents penetration of moisture as has been disclosed in EP-A's 0 097 377, 0 476 206 and 0 928 826; in GB-A 2,255,100; in US-A's 5,196,229 and 6,177,030 and in WO 00/22065. In the alternative said phosphor particles are coated with a UV-absorbing transparent synthetic resin to make them resistant to moisture, oxidation and ultraviolet irradiation as has been disclosed in JP-A 60-177090.

However, it is very difficult to apply a defect-free coating to particles having a mean particle size of 1 to 10 µm. Moreover if the coating on the phosphor particles is too thick the amount of phosphor in a layer should be reduced in order to avoid thickening of the coated phosphor layer. As this leads to reduced X-ray absorption by the phosphor screen or panel no acceptable solution can be expected from that measure so that applying a coating around the individual phosphor particles is, therefore, not always desirable.

Another way to stabilise a phosphor screen containing a hygroscopic phosphor is by adding a stabilising compound to the phosphor layer as has been disclosed e.g. in EP-A's 0 506 585, 0 544 921 and 0 747 908 and in US-A 5,639,400. This compound will either react with the absorbed water, thereby preventing reaction of the phosphor particles with water, or it will react with the breakdown products which are formed by reaction of the phosphor particles with moisture, thereby preventing discoloration of the screen. Discoloration is well-known as a common cause of deterioration of screen efficiency. It is clear that stabilising substances thus have a finite working period. Since water is attracted continuously the amount of unreacted stabilising compound diminishes with time. After a certain period of time, no unreacted stabilising material will be left and the phosphor screen will undergo delayed deterioration.

Stabilising compounds can be added to powder phosphor screens, in which the active layer is produced by coating a lacquer consisting of phosphor particles, a binder and a solvent to a substrate. Some phosphor screens are produced via physical vapour deposition in a vacuum chamber, however. It is not obvious to introduce a stabilising compound into a vapour deposited phosphor layer.

A better way in order to protect a phosphor screen is related with the application of a protective coating or coatings as has been described e.g. in EP-A's 0 209 358, 0 348 172, 0 654 794 and in US-A 4,603,253, wherein said coatings have been applied on top of the active layer containing the phosphor particles, also called "phosphor layer". Protective layers may be applied by several techniques. A less preferred way is to coat a polymer solution onto the phosphor layer and to subsequently evaporate the solvent by heating. A disadvantage of this technique is namely that the solvent my cause swelling and damaging of the phosphor layer. A more preferred way is to laminate a film onto the phosphor layer. Another preferred way is to apply a monomer lacquer onto the phosphor layer by e.g. screen printing and to cross-link the monomers by ultraviolet or electron beam irradiation, thus forming a continuous topcoat layer free of defects as described e.g. in US-A's 5,520,965 and 5,607,774.

All techniques mentioned thus far however suffer from the draw-back that the edges of the phosphor layer remain unprotected. Hence water may penetrate the phosphor layer from the side and degradation and discoloration may start from the edges, thereby moving inwards further.

An edge protection layer may be applied separately as has been disclosed e.g. in EP-A's 0 095 188 and 0 576 054, as well as in JP-A 63-193098 and in JP-B 94-31914. This requires an additional step in the manufacturing process. In addition, adhesion between the protective layer and the edge enhancing layer is not perfect, which makes the edge enhancement layer vulnerable. Upon use of the screen, the edge enhancement layer is damaged and screen degradation at the edges can proceed locally again.

### OBJECTS OF THE INVENTION

The object of the present invention is to prepare radiation detectors having moistureproof screens, envisaged as described hereinbefore, wherein it is therefore another object of the present invention to offer screens that have a low manufacturing cost and that are well protected against moisture, both at the top side and at the edges of the phosphor screen or panel thus prepared by a suitable preparation or manufacturing method.

It is a further object to provide a stimulable phosphor sheet which gives a reproduced radiation image of high quality, and more particular sharpness.

Other objects will become apparent from the description hereinafter.

### SUMMARY OF THE INVENTION

The object of the present invention to prepare screens envisaged as described hereinbefore has been realised by applying a protective layer over the phosphor layer by the method of chemical vapour deposition (further in the text indicated as "CVD"). By application of that chemical vapour deposition technique, the screen is uniformly covered over the completely exposed surface. This implies that the screen can be completely enveloped in a protective coating that extends seemlessly from the top of the screen, over the edges onto the back of the screen, thereby preventing moisture penetration, both at the top and at the edges.

A method has thus been provided of preparing a supported or self-supporting radiation detector phosphor screen or panel comprising one or more phosphor layers by the step of overcoating said screen with a moisture proof protective layer by chemical vapour deposition. More preferably, said phosphor screen is an intensifying screen or a storage phosphor screen or panel, wherein, in a further preferred embodiment said phosphor screen is a needle storage phosphor screen. More particularly in the method according to the present invention said phosphor screen is composed of a CsX:Eu²⁺ storage phosphor, wherein X is selected from the group of halides consisting of Br and Cl.

In the method of the present invention said moisture proof protective layer is a parylene layer.

Screens or panels manufactured by the method as disclosed in the description of the present invention are also claimed, as well as radiation detectors wherein use is made of said screens or panels.

Further specific features for preferred embodiments of the invention are set out in the dependent claims.

Other advantages and embodiments of the present invention will become apparent from the following description.

### DETAILED DESCRIPTION OF THE INVENTION

An essential feature in the method of the present invention is the preparation of a supported or self-supporting phosphor screen or panel comprising one or more phosphor layers by the step of overcoating said screen with a moisture proof protective layer by chemical vapour deposition.

In a preferred embodiment said moisture proof protective layer is a "parylene" layer.

General literature with respect to "parylene" polymer films can be found in e.g. Martin H. Kaufman, Herman F. Mark, and Robert B. Mesrobian, "Preparation, Properties and Structure of Polyhydrocar-bons derived from p-Xylene and Related Compounds," vol. XIII, 1954, pp. 3-20 (no date) and Andreas Griener, "Poly (1,4-xylylene)s: Polymer Films by Chemical Vapour Deposition," 1997, vol. 5, No. 1, Jan., 1997, pp. 12-16.
"Parylene", a generic name for thermoplastic polymers and copolymers based on p-xylylene and substituted p-xylylene monomers, has been shown to possess suitable physical, chemical, electrical, and thermal properties for use in integrated circuits. Deposition of such polymers by vapourisation and decomposition of a stable dimer, followed by deposition and polymerisation of the resulting reactive monomer, is discussed by Ashok K. Sharma in "Parylene-C at Subambient Temperatures", published in the Journal of Polymer Science: Part A: Polymer Chemistry, Vol. 26, at pages 2953-2971 (1988). "Parylene" polymers are typically identified as Parylene-N, Parylene-C, and Parylene-F corresponding to non-substituted p-xylylene, chlorinated p-xylylene, and fluorinated p-xylylene, respectively. Properties of such polymeric materials, including their low dielectric constants, are further discussed by R. Olson in "Xylylene Polymers", published in the Encyclopedia of Polymer Science and Engineering, Volume 17, Second Edition, at pages 990-1024 (1989). Parylene-N is deposited from non-substituted p-xylyene at temperatures below about 70-90°C.

The substituted dimers are typically cracked at temperatures which degrade the substituted p-xylylene monomers, and the parylene-C and parylene-F films must be deposited at temperatures substantially lower than 30°C.

In a preferred embodiment according to the method of present invention the protective coating is adhered to the phosphor screen or panel by chemical vapour deposition (CVD) and the vapour deposited film is a vacuum deposited polymeric film and more particularly a poly-p-xylylene film. A poly-p-xylylene has repeating units in the range from 10 to 10000, wherein each repeating unit has an aromatic nuclear group, whether or not substituted. Each substituent group, if present, can be the same or different and can be any inert organic or inorganic group which can normally be substituted on aromatic nuclei. Illustrations of such substituent groups are alkyl, aryl, alkenyl, amino, cyano, carboxyl, alkoxy, hydroxylalkyl, carbalkoxy and like radicals as well as inorganic radicals such as hydroxyl, nitro, halogen and other similar groups which are normally substitutable on aromatic nuclei. Particularly preferred of the substituted groups are those simple hydrocarbon groups such as the lower alkyl such as methyl, ethyl, propyl, butyl, hexyl and halogen groups particularly chlorine, bromine, iodine and fluorine as well as the cyano group and hydrogen.

According to the method of the present invention these polymers are formed on phosphor screens or panels by the pyrolysis and vapour deposition of a di-p-xylylene. These materials are the subject of several US-Patents such as US-A 3,117,168 entitled "Alkylated Di-p-Xylylenes", US-A 3,155,712 entitled "Cyanated Di-p-Xylylenes" and US-A 3,300,332 entitled "Coated Particulate Material and Method for Producing Same". Pyrolysis of the vaporous di-p-xylylene occurs upon heating the dimer from about 450°C. to about 700°C and preferably about 550°C to about 700°C. Regardless of the pressure employed pyrolysis of the starting di-p-xylylene begins at about 450°C. At temperatures above 700°C cleavage of the constituent groups can occur resulting in a tri- or polyfunctional species causing cross-linking of highly branched polymers. It is preferred that reduced or subatmosphere pressures are employed for pyrolysis to avoid localised hot spots. For most operations pressures within the range of 0.0001 to 10 millimetres of Hg are practical. However desired greater pressures can be employed. Likewise inert inorganic vapour diluents such as nitrogen, argon, carbon dioxide and the like can be employed to vary the optimum temperature of operation or to change the total effective pressure of the system. The diradicals formed in the manner described above are made to impinge upon the surface of the particulate material having surface temperatures below 200°C. and below the condensation temperature of the diradicals present thereby condensing thereon and thus spontaneously polymerising.

As a basic agent the commercially available di-p-xylylene composition sold by the Union Carbide Co. under the trademark "Parylene" is thus preferred. The preferred compositions for the protective moistureproof protective layer covering the phosphor screens or panels thus are the unsubstituted "Parylene N", the monochlorine substituted "Parylene C", the dichlorine substituted "Parylene D" and the "Parylene HT" (a completely fluorine substituted version of Parylene N, opposite to the other "parylenes" resistant to heat up to a temperature of 400°C and also resistant to ultra-violet radiation, moisture resistance being about the same as the moisture resistance of "Parylene C": see the note about "High Performance Coating for Electronics Resist Hydrocarbons and High Temperature" written by Guy Hall, Specialty Coating Systems, Indianapolis, available via www.scscookson.com. Technology Letters have also been made available by Specialty Coating Systems, a Cookson Company, as e.g. the one about "Solvent Resistance of the Parylenes", wherein the effect of a wide variety of organic solvents on Parylenes N, C, and D was investigated.

In a preferred embodiment according to the method of the present invention said parylene layer is a halogen-containing layer. More preferably said parylene layer is selected from the group consisting of a parylene D, a parylene C and a parylene HT layer.

Chemical vapour deposition (CVD) processes which are widely used in the deposition of thin films used in semiconductor devices and integrated circuits, involve deposition resulting from a reaction of chemical vapours homogeneously or heterogeneously on a substrate. The reaction rate is controlled, e.g., by temperature, pressure and reactant gas flow rates. The use of low vapour pressure liquids as precursors for such processes has several advantages and has become more common. A need therefore for a reliable and low maintenance liquid vaporiser which can vaporise liquid at high flow rates and additionally allows independent control of liquid and carrier gas flow rates has been addressed in US-A 6,224,681. That invention features a vaporiser which accepts a carrier gas and a pressurised liquid. An internal cavity receives the carrier gas through a carrier aperture and combines the carrier gas with vapour formed from liquid received through a liquid aperture. An advantage of the invention is that the vaporiser forms vapour by expansion in a pressure gradient, rather than evaporation by heating, and therefore can vaporise liquid at high flow rates such as those needed for some semiconductor fabrication processes, but which is also suitable for application in the method of the present invention. In a preferred embodiment the closure element is a diaphragm movable relative to the liquid aperture in order to increase or decrease the flow rate of the liquid so that the liquid flow rate is advantageously controlled solely by the movement of the diaphragm and that the liquid flow rate is independent of the carrier gas flow rate and therefore can be more accurately controlled. In a further preferred embodiment a heater heats at least a portion of the valve body near to the cavity in order to inhibit the liquid, which has cooled due to expansion, from condensing on the walls of the cavity after it has vaporised.

While CVD is a useful technique for depositing films, many of the traditional CVD processes are basically thermal processes and require temperatures in excess of 1000°C in order to obtain the necessary reactions. Such a deposition temperature is often far too high to be practically useful. One approach which has been utilised in CVD processes to lower the reaction temperature is to ionise one or more of the reactant gases. Such a technique is generally referred to as plasma enhanced chemical vapour deposition (PECVD).

In the applications as described in the present invention room temperatures are sufficient and, as a consequence, offer a substantial advantage in that no such high energies are required.

Low temperature deposition can thus be accomplished in two alternative methods. The first method utilises the upstream, remote generation of a plasma. The plasma is pumped down to a substrate by a rotating susceptor and is extinguished as it travels to the substrate, so that predominantly activated gas radicals are present. The gas radicals combine with unexcited reactant gases in order to deposit a film layer on a phosphor screen substrate by CVD techniques. The pumping of the rotating susceptor minimises gas particle recirculations and collisions to yield a useful percentage of radicals. The second method utilises an RF showerhead design which yields a concentrated plasma very close to the substrate surface. All of the gases, both plasma and reactant gases, are passed through the RF showerhead electrode and are excited. Since the susceptor acts as another electrode, the RF showerhead and the susceptor form a parallel plate electrode configuration. With the RF electrode method, the plasma gases utilised in the chemical vapour deposition at the substrate contains a mixture of both ions and radicals which contribute energy to the surface reaction.

More specifically, one CVD process may utilise a plasma source to generate, upstream of a substrate, a gas plasma containing various excited particles of the gas, including charged ions and excited, charge-neutral radicals, as well as free electrons. The excited particles of the plasma gas, and predominantly the excited radical particles are brought to the surface before they have had a chance to combine to form neutral molecules. The excited radicals chemically react with one or more reactant gases to form a thin film on a substrate. The excited radicals supply energy to the surface reaction such that CVD may be used at temperatures substantially lower than those required with traditional CVD methods. In order to prevent particle sticking and in order to promote reduced layer thickness the upstream method predominantly utilises charge-neutral, activated radicals at the substrate surface which yield conformal, uniform films. Lifetime of such activated gas radicals is short as they seek to recombine into a low energy, stable molecular structure. Efficient use of activated gas radicals by bringing the radicals to the substrate surface before a significant number of them are able to recombine to form the original, stable gas molecules is desired. For efficient delivery of the radicals a rotating susceptor is utilised which supports and rotates the substrate and creates a downward pumping action in the direction of the substrate. The rotating susceptor downward pumps the radicals to the substrate surface. Introduction into the deposition region above the substrate surface of reactant gas or gases in order to mix them with the activated gas radicals. That downward pumping action of the rotating susceptor simultaneously draws the mixture of radicals and reactant gases toward the substrate surface. At the substrate surface, the mixture of radicals and reactant gases flows radially outward from the centre of the substrate in a substantially uniform laminar flow pattern and the excited radicals react with the reactant gas particles in a surface reaction which results in a film layer being deposited upon the substrate surface.

A preferred apparatus for depositing a film on a substrate by plasma enhanced chemical vapour deposition thus comprises
- a chemical vapour deposition reaction chamber; a substrate support positioned in the reaction chamber having an upper surface configured for receiving and supporting a substrate thereon;
- a first gas supply for providing a first gas to the reaction chamber;
- a gas-dispersing showerhead opposite the substrate support and operably coupled to the first gas supply, the showerhead having a plurality of holes for dispersing the first gas through the showerhead and into the chamber proximate the substrate support and a substrate thereon;
- an energy source electrically coupled to the showerhead for electrically biasing the showerhead; the biased showerhead operable for functioning as an electrode with an associated electrical field therearound, the showerhead electrode further operable for exciting said first gas to form activated radicals and ions of the first gas;
- a second gas supply providing the constituent gas into the reaction chamber to mix with the first gas radicals and ions;
- a cylinder coupled to the showerhead electrode and positioning the showerhead electrode above the support upper surface, the cylinder having a diameter generally comparable to a diameter of the showerhead electrode for containing the first gas and establishing a directed gas flow over a substantial portion of the showerhead electrode for dispersion into the reaction chamber, the cylinder formed of a non-conductive material to prevent electrical biasing of the cylinder by the biased showerhead;
- the biased showerhead electrode being spaced approximately one inch or less from said support upper surface in the reaction chamber and operable for providing a concentrated density of the first gas activated radicals and ions to a substrate placed on the upper surface for creating a surface reaction at the substrate to deposit a film on the substrate.

In the particular case as in the method of the present invention a hardened polymeric layer is thus formed on a phosphor screen material, wherein the said polymeric material layer has been formed by reaction of at least one component, thereby forming self-condensing polymers. Reactive monomers are thus provided in form of heated vapour in order to form the desired condensation polymer on the substrate, wherein said condensation polymer is in form of a p-xylylene or "Parylene" layer on the phosphor screen substrate. Examples of these "Parylene" layers are poly-p-xylylene (Parylene-N), poly-monochloro-p-xylylene (Parylene-C) and polydichloro-p-xylylene (Parylene-D). In praxis parylene-layers thus formed are prepared by a CVD process, starting from the dimer, present in the evaporator heated up to 175 °C inside at a pressure of about 1.33 mbar. Evaporated dimers passing a pyrolysis unit (heated up to a temperature of 680 °C and 0.66 mbar) are splitted into reactive monomers are directed to a separation room having a temperature of about 250° C at a pressure of about 0.133 mbar, where a "Parylene film" is thus formed on the phosphor screen substrate.

If desired a pigment can be integrated into a thin film of a poly-p-xylylene as has been described in JP-A 62-135520. So a thin film containing a pigment dispersed therein in a high concentration while keeping the pigment in a dispersed state in the thin film. Therefore raw poly-p-xylylene material is held in a sublimation part or a vaporisation part , wherein it is sublimed or vaporised by heating to up to 100 to 200°C in an electric furnace, fed to a decomposition room, wherein it is decomposed by heating from 600 up to 800°C in an electric furnace and fed to a polymerisation chamber, communicating with a vacuum system. At the same time a pigment contained in a high-thermal conductivity, high-heat resistance tube with one end thereof being stopped is sublimed or vaporised by heating with a heater and is fed to the said polymerisation chamber in order to allow the surface of a deposition plate to adsorb a 0.1 up to 10 µm thick poly-p-xylylene film which, together with the pigment, forms a composite in which the pigment is dispersed.

The process for performing vapour-phase deposition of poly-p-xylylene having at least 5000 monomer units as disclosed in JP-A 06-336531 comprises using a degree of vacuum of usually 0.001 to 1 Torr, and comprises the steps of vaporising di-p-xylene at 100-200°C, generating di-radical p-xylene by the thermal decomposition of a dimer at 450-700°C, and simultaneously performing the adsorption and polymerisation of radical p-xylene on the adherend at room temperature to form a film of high-molecular-weight poly-p-xylylene.

A moisture-proof insulating film obtained by CVD is thus formed on the phosphor screen or panel by the method of the present invention.

In a preferred embodiment according to the method of the present invention said phosphor screen is an intensifying screen.

In another preferred embodiment according to the method of the present invention said phosphor screen is a storage phosphor or a stimulable phosphor screen. In an even more preferred embodiment according to the method of the present invention the phosphor layer on the phosphor screen is a needle storage phosphor layer. As has been disclosed in EP-A 1 113 458 it is possible to improve a binderless phosphor screen layer comprising an alkali halide phosphor by producing it in such a manner that the phosphor is present on the support as needle-like crystals having a specific crystal orientation. More particularly when a phosphor screen layer showing high [100] unit cell orientation in the plane of the screen has been produced, such a screen shows a better compromise between speed and sharpness. In order to realise such a crystal orientation on the screen layer the binder-less phosphor layer is applied to the screen or panel support a by method selected from the group consisting of physical vapour deposition, thermal vapour deposition, chemical vapour deposition, electron beam deposition, radio frequency deposition and pulsed laser deposition. Preferably the binderless phosphor screen is prepared by vacuum deposition under an inert gas atmosphere. By adjusting the temperature of the substrate and the pressure of the inert gas during vacuum deposition, the crystal orientation of the needles can be adjusted to the desired level. Preferably the inert gas that is used during vapour deposition is Ar. The temperature of the gas stream that enters the vacuum deposition apparatus is kept between 0°C and 100°C. Preferably the gas stream is kept at room temperature, i.e., between about 20°C and about 30°C. The cool gas stream entering the vacuum deposition apparatus can cool both the vapour before it is deposited as well as the substrate. It is preferred to keep said substrate at a temperature, T, so that 50°C ≤ T ≤ 300°C, preferably 90°C ≤ T ≤ 200°C. The Ar-pressure is at most 10 Pa, preferably kept between 1 and 3 Pa, both limits included. In a more preferred embodiment the Ar-pressure is kept between 0.20 and 2.00 Pa and the temperature is adjusted so that the product between temperature in degrees Celsius and Ar-pressure in Pa is between 20 and 350. When a phosphor screen layer has been prepared under the circumstances set out above not only the crystal orientation of the needles can be adjusted to the desired level, but also the macroscopic dimensions of the needles can be influenced : when a method described above has been used, very thin needles are obtained, and more particularly for a rate of vapour deposition of the phosphor or phosphor precursors above 1 mg/cm²min.

A binderless phosphor screen layer can be prepared by vacuum deposition of the phosphor crystals on the substrate as well as by combining (mixing) the ingredients for the phosphor (phosphor precursors) followed by evapourating this mixture in order to have the phosphor formed in situ during evapouration. The phosphor in the binderless phosphor screen can be any alkali metal phosphor known in the art. Suitable phosphors are e.g. phosphors according to formula I

M¹⁺X.aM²⁺X'₂BM³⁺X''₃:cZ (I)

wherein:
M¹⁺ is at least one member selected from the group consisting of Li, Na, K, Cs and Rb,
M²⁺ is at least one member selected from the group consisting of Be, Mg, Ca, Sr, Ba, Zn, Cd, Cu, Pb and Ni,
M³⁺ is at least one member selected from the group consisting of Sc, Y, La, Ce, Pr, Nd, Pm, Sm, Eu, Gd, Tb, Dy, Ho, Er, Tm, Yb, Lu, Al, Bi, In and Ga,
Z is at least one member selected from the group Ga¹⁺, Ge²⁺, Sn²⁺, Sb³⁺ and As³⁺, X, X' and X'' can be the same or different and each represents a halogen atom selected from the group consisting of F, Br, Cl, I and 0 ≤ a ≤ 1, 0 ≤ b ≤ 1 and 0 < c ≤ 0.2. Such phosphors have e.g. been disclosed in US-A 5,736,069.

Highly preferred phosphors for use in a binderless phosphor screen layer in the method of the present invention are CsX:Eu²⁺ stimulable phosphors, wherein X is selected from the group of halides consisting of Br and Cl. Those phosphors are prepared by a method comprising the steps of :
- mixing said CsX with between 10⁻³ and 5 mol % of an Europium compound selected from the group consisting of EuX'₂, EuX'₃ and EuOX', X' being a member selected from the group consisting of F, Cl, Br and I,
- firing said mixture at a temperature above 450 °C
- cooling said mixture and
- recovering the CsX:Eu phosphor.

Most preferably a CsBr:Eu stimulable phosphor is used in the method of the present invention, wherein said phosphor is prepared by the method comprising the steps of :
- mixing said CsX with between 10⁻³ and 5 mol % of an Europium compound selected from the group consisting of EuX'₂, EuX'₃ and EuOX', X' being a member selected from the group consisting of F, Cl, Br and I,
- firing said mixture at a temperature above 450 °C
- cooling said mixture and
- recovering the CsX:Eu phosphor.

The binderless screen layer can be prepared by bringing the finished phosphor on the support by any method selected from the group consisting of physical vapour deposition (which stands for thermal vapour deposition, electron beam vapour deposition, sputtering, etc....), chemical vapour deposition, radio frequency deposition and pulsed laser deposition. It is also possible to bring the alkali metal halide and the dopant together and depositing them both on the support in such a way that the alkali metal phosphor is doped during the manufacture of the screen. Thus the invention encompasses a method for manufacturing a phosphor screen containing a CsX:Eu stimulable phosphor, wherein X represents a halide selected from the group consisting of Br and Cl comprising the steps of :
- bringing multiple containers of said CsX and an Europium compound selected from the group consisting of EuX'₂, EuX'₃ and EuOX', X' being a halide selected from the group consisting of F, Cl, Br and I in condition for vapour deposition and
- depositing, by a method selected from the group consisting of, thermal vapour deposition, chemical vapour deposition, electron beam deposition, radio frequency deposition and pulsed laser deposition, both said CsX and said Europium compound on a substrate in such a ratio that on said substrate a CsX phosphor, doped with between 10⁻³ and 5 mol % of Europium, is formed.

The deposition can proceed from a single container containing a mixture of the starting compounds in the desired proportions. Thus the method further encompasses a method for manufacturing a phosphor screen containing a CsX:Eu stimulable phosphor, wherein X represents a halide selected from the group consisting of Br and Cl comprising the steps of :
- mixing said CsX with between 10⁻³ and 5 mol % of an Europium compound selected from the group consisting of EuX'₂, EuX'₃ and EuOX', X' being a halide selected from the group consisting of F, Cl, Br and I,
- bringing said mixture in condition for vapour deposition and
- depositing said mixture on a substrate by a method selected from the group consisting of physical vapour deposition, thermal vapour deposition, chemical vapour deposition, electron beam deposition, radio frequency deposition and pulsed laser deposition.

According to the method of the present invention said phosphor screen is composed of a CsX:Eu²⁺ storage phosphor, wherein X is selected from the group of halides consisting of Br and Cl.

Support materials useful for binderless storage screens having a phosphor layer with a crystal orientation suitable for use in the present invention include cardboard, glass, plastic films such as films of cellulose acetate, polyvinyl chloride, polyvinyl acetate, polyacrylonitrile, polystyrene, polyester, polyethylene terephthalate, polyamide, polyimide, cellulose triacetate and polycarbonate; metal sheets such as aluminium foil and aluminium alloy foil; ordinary papers; baryta paper; resin-coated papers; pigment papers containing titanium dioxide or the like; and papers sized with polyvinyl alcohol or the like. A glass or Al-sheet or a thermostable plastic film is preferably employed as the support material.

When a glass support is used the support may comprise a coated layer with a light absorbing compound. This layer can be present on the back side (side where no phosphor is present) or may be present underneath the phosphor. The supports can also comprise subbing layers for having a better adhesion between the phosphor and the support.

The support, when it is a thermostable plastic film may contain a light-absorbing material such as carbon black, or may contain a light-reflecting material such as titanium dioxide or barium sulphate. The former is appropriate for preparing a high-resolution type storage screen, while the latter is appropriate for preparing a high-sensitivity type storage screen. These supports may have a thickness which may differ depending on the material of the support, and may generally be between 60 µm and 10000 µm, more preferably between 80 µm and 5000 µm from the standpoint of handling.

Regarding the cell structure or partition provided by the needle-shaped phosphors in the storage screen or panel prepared according to the method of the present invention the said partition should have a high reflectance to the stimulating rays by shortening its light-scattering length and should have a low absorbance for the stimulated emission by prolonging its light-absorption length for the stimulated emission, so that diffusion of the stimulating rays on the plane of the phosphor sheet can be efficiently reduced in order to increase the definition of the obtained radiation image and decrease of emission efficiency can be effectively attained by suppressing absorption of the stimulating rays as well as the stimulated emission. Further the stimulable area wherein the phosphor is incorporated should show a high transmittance for the stimulating rays by prolonging its light-scattering length and should have a low light-absorbance for the stimulated emission by prolonging the light-absorption length for the stimulated emission, so that the stimulating rays can reach the deep area of the stimulable phosphor sheet and the stimulated emission produced in the deep area can efficiently be recovered. The stimulable phosphor sheet thus designed gives a reproduced radiation image of high quality. A stimulable phosphor screen or panel is thus prepared by the method of the present invention in order to provide a radiation image recording and reproducing method comprising the steps of recording a radiation image as a latent image, irradiating the latent image with stimulating rays in order to release stimulated emission, and electrically processing the emission in order to reproduce the radiation image, comprising partitions provided by the needle-structured phosphor layer, that divide the phosphor sheet on its plane to give plural sections, and stimulable phosphor-incorporated areas in the sections wherein the stimulable phosphor-incorporated areas have a light-scattering length of 20 to 100 µm and a light-absorption length of 1000 µm or longer, while the partitions have a light-scattering length of 0.05 to 20 µm and a light-absorption length of 1000 µm or longer, under the condition that a ratio of the light-scattering length of the stimulable phosphor-incorporated areas to that of the partitions is 3.0 or more. The invention further resides in a radiation image recording and reproducing method comprising the steps of recording on a stimulable phosphor sheet of the invention a radiation image as a latent image, irradiating the latent image with stimulating rays in order to release stimulated emission, and electrically processing the emission to reproduce the radiation image. In the text above the term "light-scattering length" indicates an average distance in which a light travels straight until it is scattered, and therefore a shorter light-scattering length means that the phosphor layer or partition highly scatters light. The term "light-absorption length" indicates an average free distance in which the stimulated emission is absorbed, and therefore a longer light-absorption length means that the phosphor layer or partition shows a lower light absorbance.

The stimulable phosphor sheet thus comprises stimulable phosphor-incorporated areas having the stimulable phosphor particles and the binder. In the stimulable phosphor sheet the stimulable phosphor particles have a volume in the range of 40% to 95% of the phosphor-incorporated area, and the phosphor-incorporated areas have a void volume of 0 to 20%. The stimulable phosphor sheet further can have partitions comprising low light-absorbing fine particles and a binder, wherein the said fine particles have a volume in the range of 30% to 90% of the partition, and can further have, in a preferred embodiment, a particle size of from 0.01 up to 5.0 µm. Same particles can be alumina or silica particles, but also white pigments as titanium dioxide, zinc oxide, zinc sulfide, and lead carbonate. Further the stimulable phosphor sheet or panel may show voids in its partitions, wherein the said voids can take a volume of 10% to 70%. Further in the stimulable phosphor sheet the low light-absorbing fine particles and the voids preferably both have a refractive index, so that the ratio of refractive index of the low light-absorbing fine particles to that of the voids is in the range of 1.1 to 3.0. The stimulable phosphor sheet may further be coloured by dyes or pigments absorbing the stimulating rays, thereby further absorbing no stimulated emission. Stimulable phosphor sheets may have a thickness in the range of 50 µm up to 1500 µm.

In another embodiment the protective coating layer may be coloured. As stimulation light becomes absorbed in said protective coating layer, a lower loss in sharpness, due to said protective coating layer may be expected.

Presence of a colourant capable of effectively absorbing the stimulating rays which have spread within the protective film, is particularly recommended. The choice of a preferred colourant or colourants depends on the nature of the stimulable phosphor employed in the radiation image storage panel. When e.g. the stimulable phosphor has been chosen in order to give stimulated emission in the wavelength region of 300 - 500 nm when excited with stimulating rays in the wavelength region of 400 - 900 nm, a suitable colourant having a body colour ranging from green to red is employable for such a stimulable phosphor, so that the mean reflectance thereof in the wavelength region of the stimulating rays is lower than the mean reflectance thereof in the wavelength region of the emitted light and that the difference therebetween is as large as possible.

According to the present invention a phosphor screen or panel prepared according to the method of the present invention has thus been made available, as well as a radiation detector comprising said phosphor screen or panel.

Having described in detail preferred embodiments of the current invention, it will now be apparent to those skilled in the art that numerous modifications can be made therein without departing from the scope of the invention as defined in the appending claims.

### Examples

### Preparation of the phosphor screens

CsBr:Eu phosphor screen layers were coated by thermal vapour deposition of CsBr and EuOBr.

Therefore CsBr was mixed with EuOBr and placed in a container in a vacuum deposition chamber. The phosphor was deposited on glass disks having a thickness of 1.5 mm and a diameter of 40 mm.

The distance between the container and the substrate was 10 cm. During vapour deposition the substrate was rotated at a velocity of 12 rpm.

Before starting evaporation, the chamber was evacuated to a pressure of 4.10⁻⁵ mbar. During the evaporation process Ar was introduced as an inert gas in the chamber.

Several screens were produced in order to provide a test material suitable for test with several differing protective coating application techniques.

### Comparative example 1

A CsBr:Eu screen without protective layer was placed in an environment having a RH (relative humidity) of 95% at a temperature of 40°C.

Within about 1 hour the solid phosphor layer had attracted such an amount of water that it was transformed into a liquid CsBr solution on top of the glass substrate.

### Comparative example 2

A CsBr:Eu screen was coated with SiO₂ in a physical vapour deposition unit by sputtering technique. A layer of 1000 nm was applied.

The sample was stored in an atmosphere of 85% RH at 20°C for one day. Under these conditions drops were formed on the phosphor screen surface, because of moisture attraction by the CsBr:Eu layer. The formation of drops was due to the fact that flaws were present in the protective layer.

### Comparative example 3

A 12 µm PET film was coated onto a CsBr:Eu screen. On the PET film a 80 nm Al₂O₃ layer was applied by physical vapour deposition technique. The PET film containing a 6 µm thick adhesive layer was laminated onto the phosphor screen.

The sample was stored in an atmosphere of 95% RH at a temperature of 60°C for two days. No damage in the middle of the screen was observed after storage. At the edges however the CsBr was dissolved locally.

### Inventive Example

Parylene C was applied on a phosphor screen by a low-temperature, low-pressure application technique. The dimer chloro-di-para-xylylene was evaporated at 150°C and broken down to the monomer at 690°C. The monomer vapour was guided to the vapour deposition chamber where polymerisation took place on the phosphor screen surface.

A first sample was covered with a coating of 12 µm thickness.

The sample was stored in an atmosphere of 95% RH at a temperature of 60°C for two days. No damage of the phosphor screen was observed after storage.

A second sample was covered with a coating of 10 µm and was placed in a water bath overnight. No damage to the CsBr:Eu phosphor layer was observed. Even at the phosphor layer edges there was no indication or sign of CsBr dissolution.

## Claims

1. Method of preparing a supported or self-supporting phosphor screen or panel comprising one or more phosphor layers by the step of overcoating said screen with a moisture proof protective layer by chemical vapour deposition.

2. Method according to claim 1, wherein said phosphor screen is an intensifying screen.

3. Method according to claim 1, wherein said phosphor screen is a storage phosphor screen.

4. Method according to claim 1, wherein said phosphor screen is a needle storage phosphor screen.

5. Method according to claim 3 or to claim 4, wherein said phosphor screen is composed of a CsX:Eu²⁺ storage phosphor, wherein X is selected from the group of halides consisting of Br and Cl.

6. Method according to any one of claims 1 to 5, wherein said moisture proof protective layer is a parylene layer.

7. Method according to claim 6, wherein said parylene layer is a halogen-containing parylene layer.

8. Method according to claim 6 or to claim 7, wherein said parylene layer is selected from the group consisting of a parylene D, a parylene C and a parylene HT layer.

9. Phosphor screen or panel prepared according to the method of any one of claims 1 to 8.

10. Radiation detector comprising a phosphor screen or panel according to claim 9.
